# EUROPEAN PATENT SPECIFICATION

(11) **EP 1 671 229 B1**
(45) Date of publication and mention of the grant of the patent: **18.11.2015**
(21) Application number: 04764383.8
(22) Date of filing: 23.08.2004
(51) Int. Cl.: G06Q 10/10

(54) **AUTOMATIC REGISTRATION AND DEREGISTRATION OF MESSAGE QUEUES**
AUTOMATISCHE REGISTRIERUNG UND DEREGISTRIERUNG VON NACHRICHTEN-WARTESCHLANGEN
ENREGISTREMENT ET DESENREGISTREMENT AUTOMATIQUES DE FILES D'ATTENTE DE MESSAGES

(30) Priority: 29.09.2003 US 506505 P; 25.11.2003 US 720141
(43) Date of publication of application: 21.06.2006
(73) Proprietor: SAP SE, 69190 Walldorf (DE)
(72) Inventor: ZÖLLNER, Ellen c/o SAP SE, Global IP Group, 69190 Walldorf (DE)
(74) Representative: Müller-Boré & Partner Patentanwälte PartG mbB
(86) International application number: PCT/EP2004/009402
(87) International publication number: WO 2005/031571

(56) References cited:
- WO-A-98/56024
- US-A1- 2002 120 717
- US-A1- 2003 009 511
- US-A1- 2003 014 551
- SUN MICROSYSTEMS: "iPlanet Messaging Server Administrator's Guide - Release 5.2" February 2002 (2002-02), SUN MICROSYSTEM , USA , XP002306777 pages 93-108 pages 471-478

## Description

### CROSS REFERENCE TO RELATED APPLICATIONS

This application claims priority from U.S. Provisional Application No. 60/506,505, titled "Automatic Registration and Deregistration of Message Queues" which was filed September 29, 2003, and U.S. Utility Application No. 10/720,141, titled "Automatic Registration And Deregistration Of Message Queues" which was filed November 25, 2003 and are incorporated by reference in their entirety.

### TECHNICAL FIELD

This invention relates to techniques used in asynchronous message transfer between different computing systems.

### BACKGROUND

Enterprise information technology (IT) systems are composed of several, separate applications working independent of each other and linked via asynchronous messages. The messages may be exchanged, for example, using a messaging system (that is, middleware), and using store-and-forward message transfer. When asynchronous messages are transferred between applications, the messages may be sent from a sending application to a queue of messages for the receiving application, which generally processes the messages in the order received. When a data transfer problem occurs, the message queue used for the data transfer may need to be identified and deregistered to stop the processing of messages from the queue. After the data transfer problem is solved, the message queue may need to be registered to re-start the processing of messages from the queue.

Document WO 98/56024 A1 discloses a method for managing message queues used for transferring messages from a first system executing a first software application of an enterprise information technology system to a second system executing a second software application of the enterprise information technology system. Each message queue is used only for one object type. The method comprises receiving an indication of an object type; identifying a message queue used for the object type; and performing a registration-related action on the identified message queue.

Document US 2003/0014551 A1 discloses a framework system improved such that flow of complex business logic for processing a variety of messages may be easily defined and changed without need for programming.

Thus, according to an aspect, it is a problem to provide a method, a computer-readable medium or propagated signal and a system for managing message queues which provide for identifying, de-registering and registering queues for messages that are asynchronously transferred between different computing systems and which help to reduce time required to solve a data transfer problem.

This problem is solved by the method having the features disclosed in claim 1, the computer-readable medium or propagated signal having the features disclosed in claim 3 and the system having the features disclosed in claim 10. Preferred embodiments are defined in the dependent subclaims.

### SUMMARY

The invention provides for identifying, de-registering, and registering queues for messages that are asynchronously transferred between different computing systems. One area where the invention may find specific applicability is in solving a data transfer problem. The automatic identification of message queues used for a particular type of enterprise application data may help to reduce time required to solve a data transfer problem by eliminating the need for a person to identify message queues involved in the data transfer problem. Thus, more time may be spent solving data transfer problems. In addition, the invention provides a faster way to de-register and register message queues, which also may reduce time required to solve a data transfer problem.

In one general aspect, message queues are used for transferring messages from a first system that is executing a first software application of an enterprise information technology system to a second system that is executing a second software application of the enterprise information technology system. Each message queue is used for only one object type. An indication of an object type is received. A message queue used for the object type is identified, and a registration-related action is performed on the identified message queue.

For example, performing a registration-related action may include causing de-registration of the identified message queue such that processing of messages from the identified message queue is ceased. Also, performing a registration-related action may include causing registration of the identified message queue such that processing of messages from the identified message queue is started. In addition, performing a registration-related action enables solving a problem with transferring enterprise application data having the object type to the second application.

Implementations may include one or more of the following features.

Identifying the message queue may include identifying the message queue used for the object type based on a name of the object type being included as part of a name of the message queue. Also, identifying or may include accessing a data structure having data that associates a name of the message queue and a name of an object type. The first software application may be a sales system, and a message may include enterprise application data.

In another general aspect, message queues used for transferring messages from a first system that is executing a first software application of an enterprise information technology system to a second system that is executing a second software application of the enterprise information technology system. Each message queue is used only for one object type. An indication of an object type is received, as is an indication of a registration-related action to be taken. A specific function is initiated for identifying a message queue used for the indicated object type and returning a queue name of the message queue used for the indicated object type. When the indication of registration-related action to be taken is to register, message queue having the returned queue name is registered such that messages in the message queue are processed from the message queue. Alternatively, when the indication of registration-related action to be taken is to de-register, the queue having the returned queue name is de-registered such that messages in the message queue cease to be processed from the message queue. Implementations may include one or more of the features noted above.

Implementations of the any of the techniques discussed above may include a method or process, a system or apparatus, or computer software on a computer-accessible medium. The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a block diagram of an enterprise information technology system in which message queues are employed.
FIG. 2 is a diagram showing an example protocol for a message, for example a message that may be transferred within the system of FIG. 1.
FIGS. 3A and 3B are flowcharts of a method of managing message queues for messages being transferred between different computing systems, for example between the different computing systems shown in FIG. 1.
FIG. 4 is diagram illustrating a computer program capable of performing the message queue management method shown in FIGS. 3A and 3B.

Like reference symbols in the various drawings indicate like elements.

### DETAILED DESCRIPTION

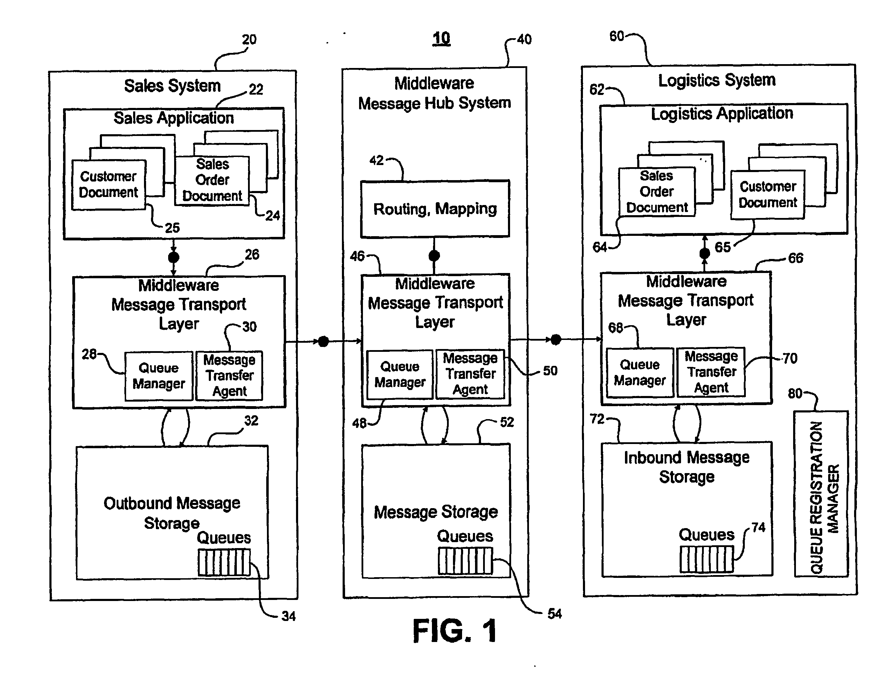

An enterprise information technology (IT) system 10, shown in FIG. 1, includes three networked computing systems, which in this example are a sales system 20, a middleware message hub 40, and a logistics system 60. Messages containing enterprise application data are transferred asynchronously from the sales system 20 and eventually to the logistics system 60, either directly or by way of the middleware message hub 40 as is depicted in FIG. 1. The messages are exchanged using a messaging system (that is, middleware) using store-and-forward message transfer. Although the message transfer technology that will be described in this document is described primarily in the context of a sales system 20 and a logistics system 60, it will be understood that the message transfer technology is applicable in many other types of systems.

The sales system 20 includes a sales software application 22, in which sales order documents 24 (or sales order objects) and customer information documents 25 (or customer information objects) are created and revised. The sales system 20 may be, for example, a computer system having a sales application thereon which is used by a salesperson. As such, the sales system 20 may be a mobile computing system such as a laptop computer or a personal digital assistant (PDA). The sales system 20 may also be, for example, a computer system with a call center software application thereon, in which a sales agent enters sales order while talking to a customer on a telephone. Another example of a sales system 20 is an internet shop to which a user may connect, for example via the internet, and enter a sales order via a web interface. The sales system 20 may also have the capability to derive from a sales order document 24 information that is needed for delivery and package that information into a delivery request message, as will be described in more detail later. In one implementation, the sales system 20 is a customer relationship management system.

The sales system 20 also includes a middleware message transport layer 26, which is part of the previously mentioned messaging system, or middleware, for the enterprise IT system 10. Information, such as a sales order document 24 and/or customer information documents 25 or alternatively data derived from the sales order document such as delivery information, and/or customer information documents 25 that needs to be forwarded to another system, such as the logistics system 60, first gets forwarded, or "posted," by the sales application 22 to the message transport layer 26. This is illustrated in FIG. 1 by the arrows shown from the sales application to the middleware message transport layer 26. The information is forwarded in a message, and, in the case when a sales order document is forwarded, the information included in the message may be the sales order document itself, may be another document including only selected data from the sales order document, or may be yet another document derived from, or calculated from, information in the sales order document. For example, the message may contain the previously mentioned delivery request information that is pulled from, or derived from, the sales order document where the delivery request information includes only the information needed by the logistics system 60 to effect delivery of the purchased item. As an example of information included in a message that is derived from the sales order document, suppose the sales application 22 holds a sales order document 24 with *n* line items. In that case a message could contain an aggregated view of the sales order with a sum of prices over all line items, instead of all line items individually. As such, the derived information (or document) and the object (or document) from which the derived document is based may look similar but they may not be identical. Whatever the case may be, the information contained in the message will be referred to herein as a document.

The middleware message transport layer 26 includes a queue manager 28, a message transfer agent 30, and an outbound message storage 32 which includes a number of queues 34. Briefly, the queue manager 28 processes a posted message and stores the message in a queue within the outbound message storage 32.

A separate queue in the queues 34 is used for each different type of document that is posted as a message by the sales application 22 to the middleware message layer 26. For example, in the example where a message includes a sales order document (or delivery execution request document) and another message includes a customer information document, there would be a different queue for the sales order document and a different queue for the customer information document. In such a case, one object type is customer information, and another object type is sales order. Other examples of object types include employees, organizations, and business partners. Business partner is a broad category that includes persons (including employees and customers), organizations, and groups of persons or organizations that are involved in using the application or enterprise system.

The message transfer agent 30 controls the forwarding of messages from the outbound message storage 32 for eventual receipt by the logistics system 60. In the FIG. 1 example, it is shown that the messages are forwarded first to the middleware message hub system 40 en route to the logistics system 60. This is just an example of how a message may be routed to another system. Alternatively, messages may be transferred directly between system 20 and 60.

The middleware message hub system 40 serves as a central messaging center for the entire enterprise IT system 10. In many cases it is desirable to utilize such a message hub system 40. For example, a system within the enterprise system 10 may send messages to several other systems. Instead of having a direct connection to each system to which the system transfers messages, the system need only be interconnected with the middleware message hub system 40. Then from the hub system 40, the message may be forwarded to its eventual destination. It will be appreciated that in FIG. 1, for simplicity, only two systems 20 and 60 and associated software applications 22 and 62 are shown, but in an actual enterprise IT system, there may be many more systems and applications, and each system may communicate with multiple other systems within the overall enterprise IT system.

The message hub system 40 includes a routing and mapping software application 42 and a middleware message transport layer 46. The routing and mapping software application 42 performs two main functions. First, the application 42 determines where a received message is to be forwarded, or routed, to reach its ultimate destination. Second, the application 42 performs a mapping function, if necessary. For example, if the data format used by the logistics system 60 differs from that used by the sales system 20, then the application 42 may translate the format for a received message into a format that can be understood by the logistics system 60.

The message hub system's message transport layer 46 is part of the previously mentioned messaging system, or middleware, for the enterprise IT system 10, and is similar in function to the message transport layer 26 in the sales system 20. The message transport layer 46 includes a queue manager 48, a message transfer agent 50, and message storage 52 that includes a number of queues 54. The queue manager 48 processes a received message and stores the message in a queue within the outbound message storage. As with the sales system transport layer 26, a separate queue in the queues 54 is used for each different type of document that is received. The message transfer agent 50 controls the forwarding of messages from the message storage 52 for eventual receipt by the logistics system 60. In the FIG. 1 example, it is shown that the messages are forwarded from the middleware message hub system 40 directly to the logistics system 60.

The logistics system 60 includes a logistics software application 62, in which sales order documents 64, or sales order objects, are processed to fulfill and execute the sales order. Alternatively, the logistics software application 62 may receive only the delivery information for a sales order document, and may process that information to effect delivery. The logistics application 62 also receives and updates customer information. The logistics system 60 may be, for example, a software application used by an order fulfillment center. In this example, the information from the sales order document 64 may be used to effect the proper delivery of the product or service that has been sold.

The logistics system 60 also includes a middleware message transport layer 66, which is part of the previously mentioned messaging system, or middleware, for the enterprise IT system 10. The message transport layer 66 is similar in function to the message transport layers 26 and 46 in the sales system 20 and in the middleware message hub system 40. In particular, the message transport layer 66 includes a queue manager 68, a message transfer agent 70, and inbound message storage 72 that includes a number of queues 74. The queue manager 68 processes a received message and stores the message in a queue within the inbound message storage 72. As with the sales system transport layer 26 and the message hub system transport layer 46, a separate queue in the queues 74 is used for each different type of document that is received. The message transfer agent 70 controls the forwarding of messages from the message storage 72 for eventual processing by the logistics application 62.

A problem may occur in the transfer of documents from the sales system 20 to the logistics system 60. Solving the problem, or while the problem is being solved, the processing messages in one of the queues 74 by the middleware 66 or the logistics application 62 may need to be stopped - that is, the queue may need to be de-registered. Once the problem with the data transfer is solved, processing messages in one of the queues then may be started - that is, the queue may need to be registered.

To analyze the data transfer problem, the processing of messages in the queues may need to be stopped. To do so, the message queues for particular types of documents may need to be identified, de-registered, and, after the data transfer problem is solved, registered. This may involve a significant time expenditure by system administrator or another type of user when the user needs to manually search the source code or computer storage systems to identity the appropriate message queue or queues. This may be particularly true, when multiple queues are used to transfer documents for a particular object type. In the example of FIG. 1, to transfer sales order documents from the sales system 20 to the logistics system 60, one message queue is used to store messages transferred from the sales system 20 to the middleware message hub system 40, and another message queue is used to store messages transferred from the middleware message hub system 40 to the logistics system 60. In some implementations, yet another message queue may be used by the logistics application 62 to receive messages from the middleware message transport layer 66. Similarly, multiple message queues may be needed to transfer customer information documents 25 from the sales system 20 to the logistics system 60. Furthermore, when sales order documents and customer documents are sent from the logistics system 60 to the sales system 20, multiple message queues may be needed for each type of document sent. Thus, in an enterprise IT system with multiple applications and many different types of documents, a substantial number of queues may be used.

A queue registration manager 80 is capable of automatically identifying message queues used for a particular type of document in response to a user entering a sales document number. The queue registration manager 80 de-registers the appropriate message queues used to transfer sale documents from the sales system 20 to the logistics system 60. The names of the de-registered message queues are then displayed for the user. When the user has completed the problem analysis, the queue registration manager 80 also automatically re-registered the appropriate queues based on an indication from the user.

The computer program and techniques are not limited to sales document processing. Other types of enterprise application data may benefit from these techniques. For example, solving a problem in the transfer of customer data and employee data also may be simplified when the message queues for those types of data are automatically identified, registered and de-registered. The automatic identification of message queues used for a particular type of enterprise application data, regardless of the type of data included in the messages in the message queue, may help to reduce time required to solve a data transfer problem because the need is eliminated for a person to manually identify message queues involved in a particular data transfer problem.

The techniques also may help simplify the solving a data transfer problem, which, in turn, may help reduce the time expenditure for the solving the transfer problem transfer is drastically reduced. For example, to identify the message queues involved in transferring a particular type of data, a person may need to search through source code for the data transfer to identify the message queues or may need to search through a large number of storage directories to identify involved message queues. In addition, knowledge of the particular message queues that are used by each of several types of data types may not be required to solve the data transfer problem for a particular type of data, which, in turn, may reduce the amount of instruction necessary for new employees who are responsible for solving data transfer problems.

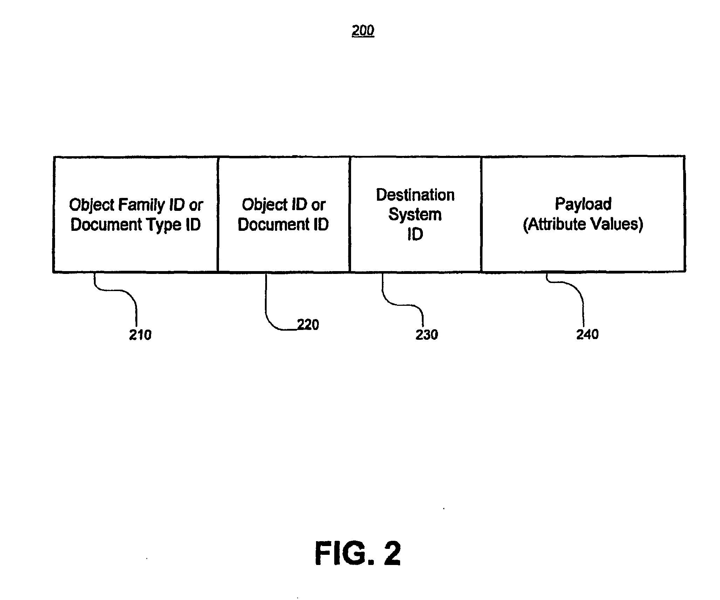

Before discussing the additional detail regarding the method by which messages are transferred within the enterprise IT system described in FIG. 1, it is first helpful to describe an example format that may be used for the messages. Referring to FIG. 2, an example message format is shown, in simplified form. In FIG. 2, a message 200 includes an object family identifier or document type identifier 210, which may be a unique identifier that identifies the type of object or type of document. For example, for a sales order object, the family, or type, identifier 210 may identify that the object is of a sales order object type, as opposed to some other type of object, such as a customer object type. The object family identifier or document type identifier 210 may be used to determine by a middleware message transport layer (such as layers 26, 46 and 66 in FIG. 1) to determine a message queue to be used for a particular type of document (or object family). An object family also may be referred to as an object type.

Next, the message 200 includes an object identifier or document identifier 220. The object identifier 220 uniquely identifies the specific object or document. In the example of the sales order document, the object identifier 220 identifies a specific sales order document, although there may be several versions of the same sales order document. Next, the message includes a destination system identifier 230, which identifies the system to which the message is to be transferred. Finally, the message 200 includes a payload 240, or in other words, values and information corresponding to various object attributes. For example, in the case of a sales order document, the payload may include information such as the identity and address of the buyer, the goods that have been purchased, delivery instructions, etc.

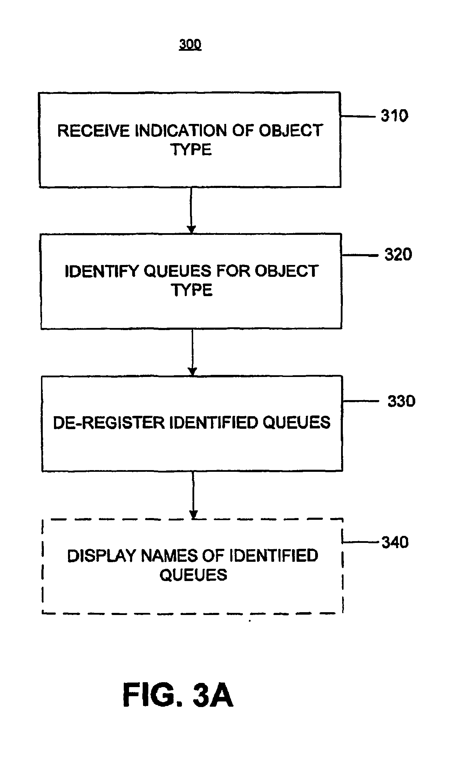

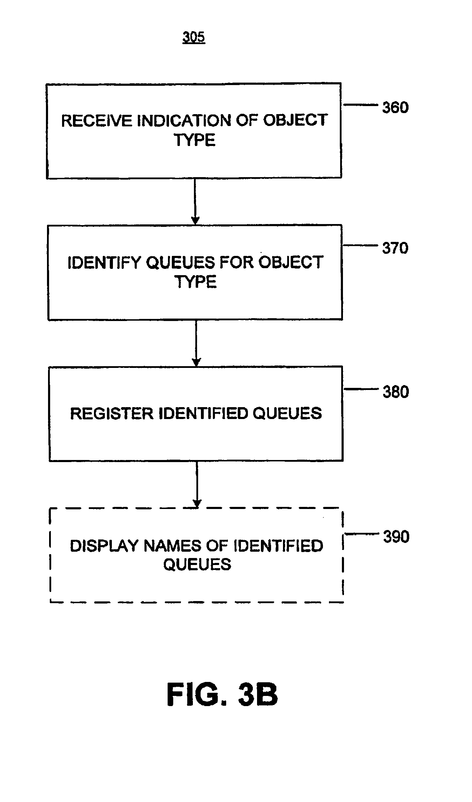

Referring now to FIG. 3A and 3B, flow charts are shown that depict an example of the message queue management method for identifying, de-registering and registering message queues. Briefly, FIG. 3A shows a queue management method 300 for de-registering or stopping the processing of messages in a queue that receives messages from another computer system, and FIG. 3B shows a method 305 for registering or starting the processing of messages in a queue. Both methods 300 and 305 provide for the identification of the queues based on a document type and automatic de-registration, or registration as the case may be, of the identified queue or queues. The methods 300 and 305 may be performed, for example, by a processor of the sales system 20 in FIG. 1 on which the queue resides or the processor of the logistics system 60 in FIG. 1, or a processor of another computer used by a system administrator or another type of user to manage enterprise application data transfer message queues. A system administrator may detect a problem with transferring data from one application to another application when a user reports a data inconsistency between two objects in the two systems or a data quality error is detected for an object type in another way. To solve the data transfer problem, the system administrator identifies and de-registers the message queues involved in the data transfer. To do so, the system administrator initiates a computer program capable of performing the de-registration method 300. Thus, when initiating the de-registration method 300, the system administrator is aware of the object type that is affected.

In FIG. 3A, the de-registration method 300 begins, at step 310, with the receipt of an object type. In the example of the logistics system 60, the de-registration method 300 may begin with the receipt of a sales order document type 64. This may be accomplished, for example, by the receipt of a selection of a particular object type by a user in response to the display of multiple object types from which the user selects. Alternatively or additionally, the object type may be received in response to a user directly keying an object type into an input device for a computer system having a computer program capable of performing method 300.

The processor identifies, at step 320, a queue or queues used for the particular object type. To do so, the processor may use a variety of techniques, alone or in combination. For example, in one implementation, a message queue may be named the same as an object type for which the queue is used. In such a case, identifying a queue for a particular object type requires searching a file system storing the queue to identity a queue having the same name as the object type received in step 310. In another example, the processor may have the capability to search source code used to manage queues, such as the queue manager 68 of the logistics system 60 in FIG. 1, to identity a queue that is associated with a particular object type. In yet another example, the processor may have the capability to search one or more database tables (or another type of data structure) that stores an association of a message queue and an object type for which the message queue is used. The ability to search a database table to identify a message queue associated with a particular object type may be particularly useful in the context of a commercially-available enterprise IT suite of applications, particularly where the applications are customizable by the purchaser. For example, message queues for documents or object types created by the purchaser may need to be created for use in transferring customized data from one application to another. An association of the message queues and the document type may be stored in a database table for use in automatically identifying and de-registering message queues.

Once the processor has identified the message queue or queues, the processor de-registers or otherwise stops the processing of messages from the identified queue at step 330. For example, the processor may send a command to a queue manager, such as the queue manager 68, to pause or terminate processing of messages in the identified queue or queues. In some implementations, the processor causes the processing of messages in the identified message queues to cease but continues to allow messages to be added to the identified message queues that are de-registered. Alternatively, the processor may prohibit messages to be added to the identified message queues that has been de-registered. If so, messages received while the message queues are de-registered may be added to a back-up message queue or may be rejected.

Optionally, the processor may present, at step 340, the identified queue or queues so that a user is made aware of what queues are used for a particular type of object. For example, the processor may display on a display device, print on a printer, send an electronic mail message, or provide a message to an interactive voice response system. The presentation of the name of the message queue or queues may be useful. For example, a system administrator may use the identification to investigate a problem with the identified message queues. In some implementations, the processor may present the queue name and pause. The processor de-registers the message queues only after a user confirms that the correct message queues have been identified. Such a feature may be particularly useful during the development of a computer program capable of performing the method 300. For example, the capability of the computer program to correctly identify a queue or queues may be tested on an operational application without disrupting the application. This may be, for example, when a user chooses to abort the method rather than confirming that the correct message queues have been identified, which triggers the de-registering of the message queues, which, in turn, is disruptive to an operational application.

Referring now to FIG. 3B, once the problem with the data transfer has been solved, a system administrator or another type of user may use method 305 to register or otherwise re-start the processing of messages from the queue de-registered in method 300. In FIG. 3B, the registration method 305 begins, at step 360, with the receipt of a object type. The processor identifies, at step 370, a queue or queues used for the particular object type. To do so, the processor may use the same or different techniques used to identify a particular object type in step 310 in FIG. 3A. Once the processor has identified the queue or queues, the processor registers or otherwise starts the processing of messages from the identified queue or queues in step 380. Optionally, the processor in step 390 may present the identified queue or queues.

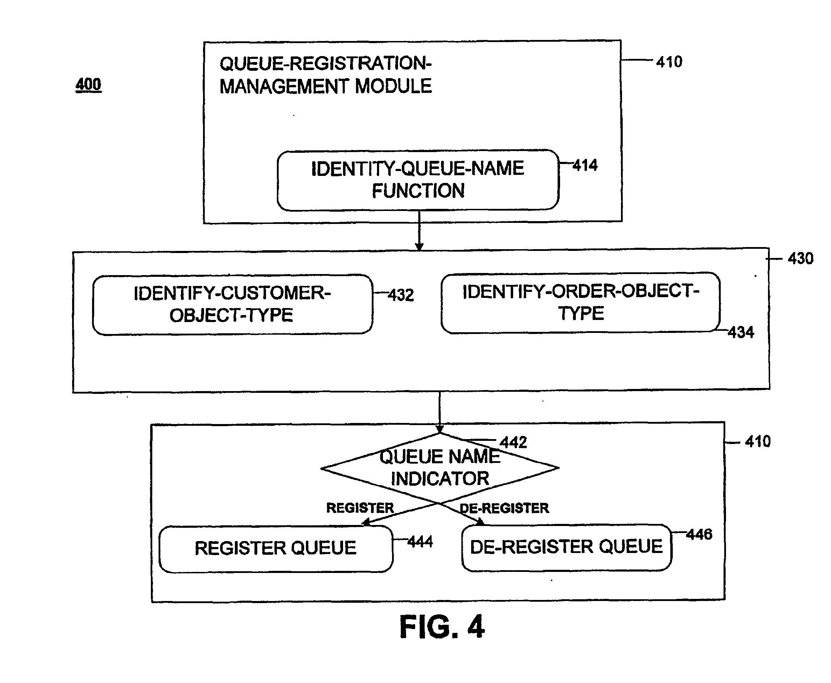

Referring now to FIG. 4, a diagram is provided that illustrates a computer program capable of de-registering and registering message queues for a particular object type based on the identification of an object type. In the example of FIG. 4, the computer program 400 is implemented in a report generation application system that may assist a computer programmer or an end-user in generating a report from enterprise application data. The computer program 400 includes a queue-registration-management module 410 that includes commands that are applicable to more than one object type. For this reason, the queue-registration-management module 410 may be referred to as a general portion or a generic portion of the computer program 400.

The computer program 400 also has a specific function 430 that is called by the queue-registration-management module 410 and includes commands that are applicable to a particular object type. The specific function 430 also may be considered as a data-type-specific portion of the computer program 400.

The queue-registration-management module 410 may be implemented as a report defined in a report generation application system. In another implementation, the queue-management-registration module 410 may be a common gateway interface application accessible through the internet, a method written in an object-oriented language, or another type of programming construct that is used to provide instructions to a processor.

The queue-registration-management module 410 is initiated by a user who specifies as parameters for the module (1) an object type parameter and (2) an indication parameter. The indication parameter indicates whether the queues associated with the identified object type are to be registered or de-registered. The queue-registration-management module 410 includes a command (or another type of computer instruction) to initiate an identity-queue-name-function 414. When the queue-registration-management module 410 calls a identity-queue-name function 414, the queue-registration-management module 410 passes the object type parameter and the indication parameter to the identify-queue-name function 414. The identity-queue-name function 414 determines, based on the object type parameter, a specific function module to call to identify the queues associated with the object type. This may be accomplished, for example, by including specific commands in the identify-queue-name function 414 to conditionally call the appropriate function module based on a particular object type. In another implementation, the identify-queue-name function 414 may access a list, a table or another type of data structure that associates a particular function module with an object type to identity a function module to call.

The example of FIG. 4 includes an identify-customer-object-type function 432 and an identify-order-object-type function 434, which are both included in the specific function 430 of the computer program 400. The identify-customer-object-type function 432 identifies the queues associated with a customer object, and the identify-order-object-type function 434 identifies the queue or queues associated with an order object.

Each of the identify-customer-object-type function 432 and the identify-order-object-type function 434 return the name of each of the identified queues to the queue-registration-management module 410, as represented by the queue-name indicator 442. When the indicator parameter for the queue-registration-management module 410 indicates that the queues are to be registered, a register queue process 444 is called with the identified queue names to register the identified queues. When the indicator parameter for the queue-registration-management module 410 indicates that the queues are to be de-registered, a de-register queue process 446 is called to de-register the identified queues.

## Claims

1. A method for managing message queues (34, 74) used for transferring messages (200) from a first system (20) executing a first software application (22) of an enterprise information technology system (10) to a second system (60) executing a second software application (62) of the enterprise information technology system (10), wherein the first system (20) includes a number of message queues (34) and the second system (60) includes a number of message queues (74), and wherein each message queue (34, 74) is used only for one object type and each separate message queue (34, 74) is used for each different object type, the method comprising:
in case of a problem occurring in the transfer of messages (200) from the first system (20) to the second system (60), receiving from a user an indication of an object type;
identifying a message queue (34, 74) used for the particular type of object or for the object type by a queue registration manager (80); and
performing a registration-related action on the identified message queue (34, 74);
wherein performing a registration related action comprises causing de-registration of the identified message queue (34, 74) such that processing of messages from the identified message queue (34, 74) is ceased to enable solving the problem with transferring enterprise application data having the object type to the second application (62); and
when the user has completed the problem analysis, receiving from the user an indication of an object type;
identifying a message queue (34, 74) used for the particular type of object or for the object type by the queue registration manager (80); and
performing a registration-related action on the identified message queue (34, 74);
wherein performing a registration-related action comprises causing registration of the identified message queue (34, 74) such that processing of messages (200) from the identified message queue (34, 74) is started after the data transfer problem is solved.

2. The method of claim 1, the method further comprising:
receiving an indication of the registration-related action to be taken;
initiating a specific function for identifying the message queue (34, 74) used for the indicated object type and returning a queue name of the message queue (34, 74) used for the indicated object type;
when the indication of registration-related action to be taken is to register, registering the message queue (34, 74) having the returned queue name such that messages (200) in the message queue (34, 74) are processed from the message queue (34, 74); and
when the indication of registration-related action to be taken is to de-register, de-registering the queue (34, 74) having the returned queue name such that messages (200) in the message queue (34, 74) cease to be processed from the message queue (34, 74).

3. A computer-readable medium or propagated signal having embodied thereon a computer program configured to manage message queues (34, 74) used for transferring messages (200) from a first system (20) executing a first software application (22) of an enterprise information technology system (10) to a second system (60) executing a second software application (62) of the enterprise information technology system (10), wherein each message queue (34, 74) is used only for one object type, the medium or signal comprising one or more code segments configured to perform operations according to a method of claim 1.

4. The medium or signal of claim 3 wherein identifying the message queue (34, 74) comprises identifying a message queue (34, 74) used for the object type based on a name of the object type being included as part of a name of the message queue (34, 74).

5. The medium or signal of anyone of claims 3 or 4 wherein identifying the message queue (34, 74) comprises identifying a message queue (34, 74) used for the object type by accessing a data structure having data that associates a name of the message queue (34, 74) and a name of an object type.

6. The medium or signal of anyone of claims 3 to 5 wherein the first software application (22) comprises a sales system.

7. The medium or signal of anyone of claims 3 to 6 wherein a message (200) includes enterprise application data.

8. The medium of claim 3, wherein the medium or signal comprises a generic module with one or more code segments configured to perform operations according to a method of claim 2.

9. The medium or signal of claim 8 wherein a message (200) includes enterprise application data.

10. A system for managing message queues (34, 74) used for transferring messages (200) from a first computer system (20), having a processor connected to a storage device and one or more input/output devices and executing a first software application (22) of an enterprise information technology system (10), to a second computer system (60), having a processor connected to a storage device and one or more input/output devices and executing a second software application (64) of the enterprise information technology system (10), wherein each message queue (34, 74) is used only for one object type and the processor of the second computer system (60) is configured to perform operations according to a method of claim 1.

11. The system of claim 10, wherein the processor of the second computer system (60) is configured to perform operations according to a method of claim 2.

## Patentansprüche

1. Verfahren zur Verwaltung von Nachrichten-Warteschlangen (34, 74), die verwendet werden, um Nachrichten (200) von einem ersten System (20), das eine erste Softwareanwendung (22) eines Unternehmensinformationstechnologiesystems (10) ausführt, an ein zweites System (60), das eine zweite Softwareanwendung (62) des Unternehmensinformationstechnologiesystems (10) ausführt, zu überführen, wobei das erste System (20) eine Anzahl von Nachrichten-Warteschlangen (34) umfasst und das zweite System (60) eine Anzahl von Nachrichten-Warteschlangen (74) umfasst, und wobei jede Nachrichten-Warteschlange (34, 74) nur für einen Objekttyp verwendet wird und jede getrennte Nachrichten-Warteschlange (34, 74) für jeden einzelnen unterschiedlichen Objekttyp verwendet wird, wobei das Verfahren umfasst:
falls ein Problem bei der Überführung von Nachrichten (200) von dem ersten System (20) an das zweite System (60) auftritt, Empfangen einer Anzeige des Objekttyps von einem Benutzer;
Identifizieren einer Nachrichten-Warteschlange (34, 74), die für den bestimmten Typ von Objekt oder den Objekttyp verwendet wird, durch einen Warteschlangen-Registrierungsverwalter (80); und
Durchführen einer registrierungsbezogenen Aktion für die identifizierte Nachrichten-Warteschlange (34; 74);
wobei das Durchführen einer registrierungsbezogenen Aktion das Bewirken der Deregistrierung der identifizierten Nachrichten-Warteschlange (34, 74) umfasst, so dass die Verarbeitung von Nachrichten aus der identifizierten Nachrichten-Warteschlange (34, 74) beendet wird, um das Lösen des Problems mit der Überführung von Unternehmensanwendungsdaten mit dem Objekttyp an die zweite Anwendung (62) zu ermöglichen; und
wenn der Benutzer die Problemanalyse abgeschlossen hat, Empfangen einer Anzeige eines Objekttyps von dem Benutzer;
Identifizieren einer Nachrichten-Warteschlange (34, 74), die für den bestimmten Typ von Objekt oder den Objekttyp verendet wird, durch den Warteschlangen-Registrierungsverwalter (80); und
Durchführen einer registrierungsbezogenen Aktion für die identifizierte Nachrichten-Warteschlange (34; 74);
wobei das Durchführen einer registrierungsbezogenen Aktion das Bewirken der Registrierung der identifizierten Nachrichten-Warteschlange (34, 74) umfasst, so dass die Verarbeitung von Nachrichten (200) aus der identifizierten Nachrichten-Warteschlange (34, 74) begonnen wird, nachdem das Datenüberführungsproblem gelöst ist.

2. Verfahren nach Anspruch 1, wobei das Verfahren ferner umfasst:
Empfangen einer Anzeige der registrierungsbezogenen Aktion, die durchgeführt werden soll;
Einleiten einer spezifischen Funktion zum Identifizieren der Nachrichten-Warteschlange (34, 74), die für den angezeigten Objekttyp verwendet wird, und Zurückgeben eines Warteschlangennamens der Nachrichten-Warteschlange (34, 74), die für den angezeigten Objekttyp verwendet wird;
wenn die Anzeige der registrierungsbezogenen Aktion, die durchgeführt werden soll, Registrieren ist, Registrieren der Nachrichten-Warteschlange (34, 74) mit dem zurückgegebenen Warteschlangename, so dass Nachrichten (200) in der Nachrichten-Warteschlange (34, 74) von der Nachrichten-Warteschlange (34, 74) verarbeitet werden; und
wenn die Anzeige der registrierungsbezogenen Aktion, die durchgeführt werden soll, Deregistrieren ist, Deregistrieren der Warteschlange (34, 74) mit dem zurückgegebenen Warteschlangenamen, so dass beendet wird, Nachrichten (200) in der Nachrichten-Warteschlange (34, 74) von der Nachrichten-Warteschlange (34, 74) zu verarbeiten.

3. Computerlesbares Medium oder verbreitetes Signal, das ein Computerprogramm darauf ausgeführt hat, das konfiguriert ist, um Nachrichten-Warteschlangen (34, 74), die zum Überführen von Nachrichten (200) von einem ersten System (20), das eine erste Softwareanwendung (22) eines Unternehmensinformationstechnologiesystems (10) ausführt, an ein zweites System (60), das eine zweite Softwareanwendung (62) des Unternehmensinformationstechnologiesystems (10) ausführt, verwendet werden, zu verwalten, wobei jede Nachrichten-Warteschlange (34, 74) nur für einen Objekttyp verwendet wird, wobei das Medium oder Signal ein oder mehrere Codesegmente umfasst, die konfiguriert sind, um Betriebe gemäß einem Verfahren von Anspruch 1 durchzuführen.

4. Medium oder Signal nach Anspruch 3, wobei das Identifizieren der Nachrichten-Warteschlange (34, 74) das Identifizieren einer Nachrichten-Warteschlange (34, 74), die für den Objekttyp verwendet wird, basierend auf einem Namen des Objekttyps, der als Teil eines Namens der Nachrichten-Warteschlange (34, 74) enthalten ist, umfasst.

5. Medium oder Signal nach einem der Ansprüche 3 oder 4, wobei das Identifizieren der Nachrichten-Warteschlange (34, 74) das Identifizieren einer Nachrichten-Warteschlange (34, 74), die für den Objekttyp verwendet wird, durch Zugreifen auf eine Datenstruktur mit Daten, die einen Namen der Nachrichten-Warteschlange (34, 74) und einen Namen eines Objekttyps verbinden, umfasst.

6. Medium oder Signal nach einem der Ansprüche 3 bis 5, wobei die erste Softwareanwendung (22) ein Vertriebssystem umfasst.

7. Medium oder Signal nach einem der Ansprüche 3 bis 6, wobei eine Nachricht (200) Unternehmensanwendungsdaten umfasst.

8. Medium nach Anspruch 3, wobei das Medium oder Signal ein generisches Modul mit einem oder mehreren Codesegmenten umfasst, die konfiguriert sind, um Betriebe gemäß einem Verfahren von Anspruch 2 durchzuführen.

9. Medium oder Signal nach Anspruch 8, wobei eine Nachricht (200) Unternehmensanwendungsdaten umfasst.

10. System zur Verwaltung von Nachrichten-Warteschlangem (34, 74), die zum Überführen von Nachrichten (200) von einem ersten Computersystem (20), das einen mit einer Speichervorrichtung verbundenen Prozessor und eine oder mehrere Eingabe-/Ausgabevorrichtungen hat und eine erste Softwareanwendung (22) eines Unternehmensinformationstechnologiesystems (10) ausführt, an ein zweites Computersystem (60), das einen mit einer Speichervorrichtung verbundenen Prozessor und eine oder mehrere Eingabe-/Ausgabevorrichtungen hat und eine zweite Softwareanwendung (64) des Unternehmensinformationstechnologiesystems (10) ausführt, verwendet wird, wobei jede Nachrichten-Warteschlange (34, 74) nur für einen Objekttyp verwendet wird und der Prozessor des zweiten Computersystems (60) konfiguriert ist, um Betriebe gemäß einem Verfahren von Anspruch 1 durchzuführen.

11. System nach Anspruch 10, wobei der Prozessor des zweiten Computersystems (60) konfiguriert ist, um Betriebe gemäß einem Verfahren von Anspruch 2 durchzuführen.

## Revendications

1. Procédé de gestion de files d'attente de messages (34, 74) utilisées pour transférer des messages (200) d'un premier système (20) exécutant une première application logicielle (22) d'un système informatique d'entreprise (10) à un second système (60) exécutant une seconde application logicielle (62) du système informatique d'entreprise (10), dans lequel le premier système (20) inclut un certain nombre de files d'attente de messages (34) et le second système (60) inclut un certain nombre de files d'attente de messages (74), et dans lequel chaque file d'attente de messages (34, 74) est utilisée uniquement pour un type d'objet et chaque file d'attente de messages séparée (34, 74) est utilisée pour chaque type d'objet différent, le procédé comprenant :
dans le cas d'un problème survenant dans le transfert de messages (200) du premier système (20) au second système (60), recevoir d'un utilisateur une indication d'un type d'objet ;
identifier une file d'attente de messages (34, 74) utilisée pour le type particulier d'objet ou pour le type d'objet par un gestionnaire d'enregistrement de file d'attente (80) ; et
réaliser une action liée à l'enregistrement sur la file d'attente de messages identifiée (34, 74) ;
dans lequel réaliser une action liée à l'enregistrement comprend amener le désenregistrement de la file d'attente de messages identifiée (34, 74) de sorte que le traitement de messages provenant de la file d'attente de messages identifiée (34, 74) est cessé pour permettre de résoudre le problème avec le transfert de données d'application d'entreprise ayant le type d'objet à la seconde application (62) ; et
lorsque l'utilisateur a terminé l'analyse de problème, recevoir de l'utilisateur une indication d'un type d'objet ;
identifier une file d'attente de messages (34, 74) utilisée pour le type particulier d'objet ou pour le type d'objet par le gestionnaire d'enregistrement de file d'attente (80) ; et
réaliser une action liée à l'enregistrement sur la file d'attente de messages identifiée (34, 74) ;
dans lequel réaliser une action liée à l'enregistrement comprend amener l'enregistrement de la file d'attente de messages identifiée (34, 74) de sorte que le traitement de messages (200) provenant de la file d'attente de messages identifiée (34, 74) est démarré après la résolution du problème de transfert de données.

2. Procédé selon la revendication 1, le procédé comprenant en outre :
recevoir une indication de l'action liée à l'enregistrement devant être effectuée ;
initier une fonction spécifique pour identifier la file d'attente de messages (34, 74) utilisée pour le type d'objet indiqué et renvoyer un nom de file d'attente de la file d'attente de messages (34, 74) utilisée pour le type d'objet indiqué ;
lorsque l'indication d'action liée à l'enregistrement devant être effectuée est d'enregistrer, enregistrer la file d'attente de messages (34, 74) ayant le nom de file d'attente renvoyé de sorte que des messages (200) dans la file d'attente de messages (34, 74) sont traités depuis la file d'attente de messages (34, 74) ; et
lorsque l'indication d'action liée à l'enregistrement devant être effectuée est de désenregistrer, désenregistrer la file d'attente (34, 74) ayant le nom de file d'attente renvoyé de sorte que des messages (200) dans la file d'attente de messages (34, 74) cessent d'être traités depuis la file d'attente de messages (34, 74).

3. Support lisible par ordinateur ou signal propagé ayant mis en oeuvre sur lui un programme informatique configuré pour gérer des files d'attente de messages (34, 74) utilisées pour transférer des messages (200) d'un premier système (20) exécutant une première application logicielle (22) d'un système informatique d'entreprise (10) à un second système (60) exécutant une seconde application logicielle (62) du système informatique d'entreprise (10), dans lequel chaque file d'attente de messages (34, 74) est utilisée uniquement pour un type d'objet, le support ou signal comprenant un ou plusieurs segments de code configurés pour réaliser des opérations conformément à un procédé selon la revendication 1.

4. Support ou signal selon la revendication 3, dans lequel identifier la file d'attente de messages (34, 74) comprend identifier une file d'attente de messages (34, 74) utilisée pour le type d'objet en fonction d'un nom du type d'objet qui est inclus dans le cadre d'un nom de la file d'attente de messages (34, 74).

5. Support ou signal selon l'une quelconque des revendications 3 ou 4, dans lequel identifier la file d'attente de messages (34, 74) comprend identifier une file d'attente de messages (34, 74) utilisée pour le type d'objet en accédant à une structure de données ayant des données qui associent un nom de la file d'attente de messages (34, 74) et un nom d'un type d'objet.

6. Support ou signal selon l'une quelconque des revendications 3 à 5, dans lequel la première application logicielle (22) comprend un système de ventes.

7. Support ou signal selon l'une quelconque des revendications 3 à 6, dans lequel un message (200) inclut des données d'application d'entreprise.

8. Support selon la revendication 3, dans lequel le support ou signal comprend un module générique avec un ou plusieurs segments de code configurés pour réaliser des opérations conformément à un procédé selon la revendication 2.

9. Support ou signal selon la revendication 8, dans lequel un message (200) inclut des données d'application d'entreprise.

10. Système de gestion de files d'attente de messages (34, 74) utilisées pour transférer des messages (200) d'un premier système informatique (20), ayant un processeur connecté à un dispositif de stockage et un ou plusieurs dispositifs d'entrée/sortie et exécutant une première application logicielle (22) d'un système informatique d'entreprise (10), à un second système informatique (60), ayant un processeur connecté à un dispositif de stockage et un ou plusieurs dispositifs d'entrée/sortie et exécutant une seconde application logicielle (64) du système informatique d'entreprise (10), dans lequel chaque file d'attente de messages (34, 74) est utilisée uniquement pour un type d'objet et le processeur du second système informatique (60) est configuré pour réaliser des opérations conformément à un procédé selon la revendication 1.

11. Système selon la revendication 10, dans lequel le processeur du second système informatique (60) est configuré pour réaliser des opérations conformément à un procédé selon la revendication 2.
